# EUROPEAN PATENT SPECIFICATION

(11) **EP 1 550 597 B1**
(45) Date of publication and mention of the grant of the patent: **19.09.2012**
(21) Application number: 04030345.5
(22) Date of filing: 21.12.2004
(51) Int. Cl.: B62D 1/06

(54) **Heatable steering wheel**
Heizbares Lenkrad
Volant chauffant

(30) Priority: 31.12.2003 GB 0330252
(43) Date of publication of application: 06.07.2005
(73) Proprietor: AUTOLIV DEVELOPMENT AB, 44783 Vargarda (SE)
(72) Inventor: Dodard, Jerome, 86000 Poitiers (FR); Pautou, Sebastien, 86000 Poitiers (FR); Lemasson, Pascal, 86000 St. Georges les Baillargeaux (FR); Tarte, Frederic, 86580 Biard (FR)
(74) Representative: Beattie, Alex Thomas Stewart

(56) References cited:
- JP-A- 62 157 859
- US-A- 5 850 741

## Description

**THE PRESENT INVENTION** relates to a steering wheel, and more particularly relates to a steering wheel for a motor vehicle, such as a motor car.

It has been proposed to provide a steering wheel which incorporates a heat transfer unit to transfer heat to and from a rim of the steering wheel.

Conventional steering wheels incorporate a frame that consists of a rim connected to a spoke. The spoke is connected to a hub which engages the steering column of the vehicle. The steering wheel frame must be mechanically strong and is usually made from metal. The metal frame is usually coated with a plastic layer in order to provide the steering wheel with a comfortable feel.

GB 2382864 A is regarded as closest prior art and forms the preamble of claim 1; it discloses a steering wheel which incorporates a heat transfer unit, in the form of a heat exchanger. The spokes of the steering wheel incorporate heat pipes, which extend to a metal hub which is in thermal contact with a heat exchanger, and which has cooling fins. The heat exchanger is configured to heat the hub and thus the ends of the spokes, causing the spokes to inject heat into the rim. The temperature of the steering wheel rim may therefore be adjusted to, for instance, heat the rim of the steering wheel to a comfortable temperature for use in cold weather.

If the rim is to be cooled the system is reversed and cool air blown onto the fins to cool the hub and thus to cool the rim.

The hub has a high thermal capacity and the entire hub needs to be heated or cooled before the rim of the steering wheel is heated or cooled. This gives an undesirable delay in the heating or cooling of the steering wheel rim.

US 5,850,741 discloses a vehicle steering wheel having normally gripped regions whose temperature is modified from extremes to acceptable values by a heat pump with heat transfer occurring along heat pipe sections between primary heat exchanges at the gripped regions and the temperature modifiable surface. Circuit apparatus automatically energises the heat pump to provide heating or cooling, as needed.

JP62157859 discloses a steering wheel having spokes attaching a rim to a steering shaft. Heat conductive bodies having a large heat transfer co-efficient are provided in the spokes and the steering wheel. In addition, a thermo-element is provided along with a radiating plate.

The present invention seeks to provide an improved steering wheel.

According to this invention there is provided a steering wheel comprising a hub mounted on a steering column of a vehicle, a heat transfer unit to be mounted on the hub, and at least one thermally conductive spoke mounted on the hub, with part of the hub retaining the spoke, one end of the spoke being in thermal contact with the heat transfer unit, the other end of the spoke being attached to a rim of the steering wheel to conduct heat from the heat transfer unit to the rim, or from the rim to the heat transfer unit, wherein at least that part of the hub which retains the or each spoke is made of a material of low thermal conductivity.

Preferably the hub is made of plastic.

Conveniently the hub has a portion of honeycomb-type shape.

Advantageously the hub has at least one protruding sleeve to receive the or each spoke.

Preferably the rim incorporates at least one heat pipe, and the or each spoke is formed as a terminal part of a said heat pipe.

Conveniently the hub is offset from the rim and the heat transfer unit is on the side of the hub remote from the rim.

Advantageously the heat transfer unit includes a projection to accommodate one end of the spoke, the projection being of thermally conductive material.

Preferably an aperture for mounting the steering wheel extends through both the hub and the heat transfer unit.

In order that the invention may be more readily understood, and so that further features thereof may be appreciated, the invention will now be described, by way of example, with reference to the accompanying drawings in which:
FIGURE 1 is a perspective view from above of part of a steering wheel frame having heat pipes,
FIGURE 2 is a perspective view from above of a partially fabricated steering wheel incorporating the frame shown in Figure 1,
FIGURE 3 is a side view of the steering wheel of Figure 2,
FIGURE 4 is a perspective view from below the steering wheel of Figures 2 and 3,
FIGURE 5 is a perspective view from above the steering wheel of Figures 2 to 3 when fully fabricated and,
FIGURE 6 is a perspective view, corresponding to Figure 1, of the upper side of part of an alternative steering wheel.

Initially it is to be appreciated that the preferred embodiment of the present invention incorporates "heat pipes". Heat pipes have been proposed before and are elongate pipes which can be used to facilitate the rapid transfer of heat. A typical heat pipe comprises an elongate tube formed of metal such as aluminium or copper. The interior of the tube contains an elongate wick which extends from one end of the tube to the other. The wick may be mounted on the inner wall of the pipe. The pipe contains a quantity of a volatile fluid such as water, acetone, ethanol or methanol. The pipe is maintained with an internal pressure which is substantially below atmospheric pressure. If one end region of the pipe is heated, the liquid within the pipe will vapourise within that region and will then move, in the gaseous phase, towards the other end of the pipe. As the vapour becomes cool, the vapour will condense. The vapour will again turn into a liquid and the liquid will be transported by gravity and/or by a wicking action provided by the wick back to the heated end of the pipe. It is to be appreciated that heat will be absorbed, due to the latent heat of vapourisation, at the heated end of the pipe, and heat will be omitted, due to the reclamation of the heat of vapourisation as the vapour condenses, at the point in the heat pipe at which the vapour condenses. Heat can be very quickly transported from one end of a heat pipe to the other with very little loss of heat during transport. Heat pipes of this type have been proposed previously and are know to the man skilled in the art.

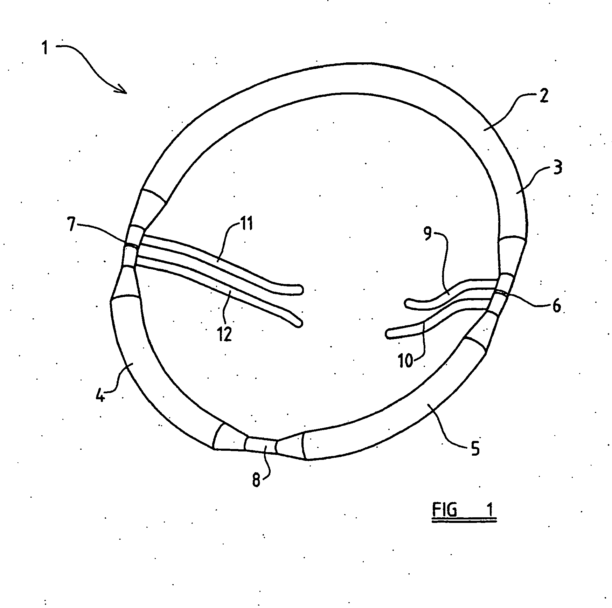

Figure 1 illustrates part of a steering wheel frame 1 having a rim 2 which, in this preferred embodiment, incorporating three heat pipes 3-5. Each of the heat pipes 3-5 is of arcuate tubular form and at each end the diameter is reduced in a terminal frustoconical section. The heat pipes 3-5 are joined end to end at three junctions 6-8, to form the rim 2 of the steering wheel. Each of the junctions 6-8 provide a good thermal contact between two adjacent heat pipes 3-5. In this preferred embodiment the junctions 6-8 are formed by welding the ends of the heat pipes 3-5 to cylindrical junction pieces, but the junctions 6-8 may be formed by any other means which result in a good thermal connection between the heat pipes.

The steering wheel frame 1 incorporates two thermally conductive spokes 9,10 which are attached to the rim 2 at junction 6, and two further thermally conductive spokes 11,12 which are attached to the rim 2 at junction 7. In this embodiment the spokes 9-12 are welded to the rim 2 at junctions 6 and 7, but they may be attached to rim 2 by another means which forms a good thermal connection. The spokes 9-12 are attached to rim 2 to be radially inwardly directed towards the centre of the circular region defined by rim 2. Each of the spokes 9-12 is inclined and extends at an angle to the plane defined by the rim 2, such that the free ends of spokes 9-12 are below the plane defined by the rim 2. The spokes 9-12 are formed of heat pipes, but they may be alternatively constructed in any other way such as to allow good thermal conductivity between each end of each spoke 9-12.

In a modified embodiment, instead of the rim of the frame being made of three heat pipes 3-5, the rim of the frame is made of two semi-circular heat pipes.

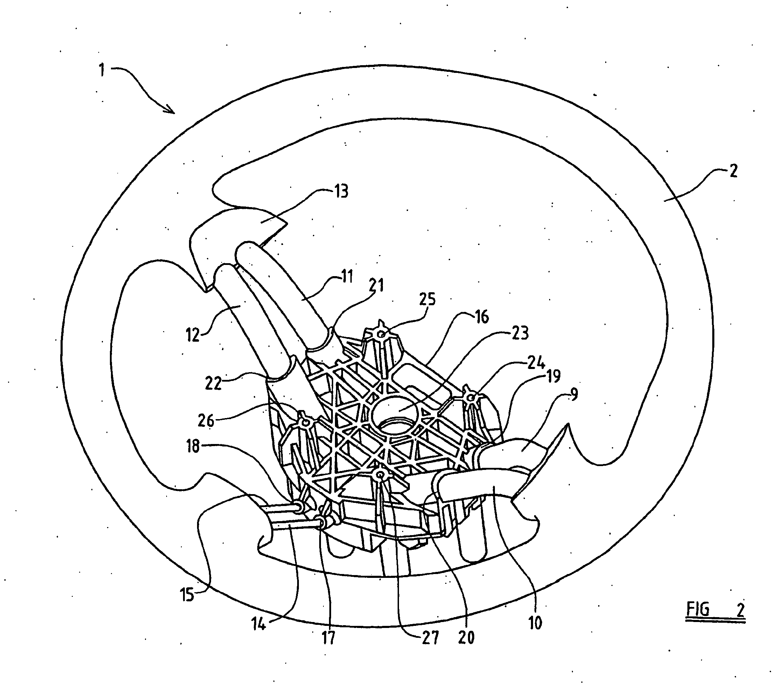

After the steering wheel frame 1 shown in Figure 1 has been constructed plastic 13 is moulded around the rim 2, over the junctions 6-8 and partly over the spokes 9-12, as shown in Figure 2. The plastic 13 moulded onto the frame makes the frame more comfortable to hold. Additional support spokes 14,15 are also attached to the rim 2 at junction 8. A plastic hub 16 is then moulded onto spokes 9-12 and support spokes 14,15. Because of the inclination of the spokes 9-12 the hub 16 is offset to one side of the rim 2.

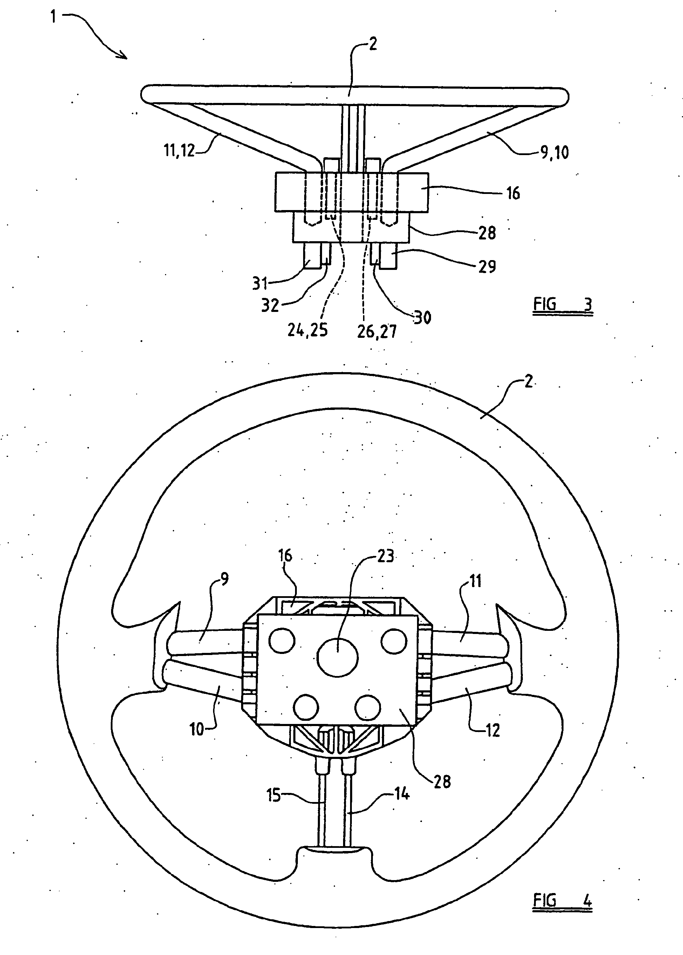

The hub 16 is constructed from a plastic material of low thermal conductivity. The hub 16 as shown in Figures 2 to 4 has a generally planar portion, which is constructed to be of honeycomb-type shape in order to minimise its weight whilst maintaining a good mechanical behaviour and to ensure that it is a good thermal insulator. The support spokes 14,15 are moulded into one side of the hub 16 at support points 17,18. The generally planar portion of the hub 16 incorporates upstanding sleeves 19-22 which each receive and retain one of the spokes 9-12. At the points where the support sleeves 19-22 surround the spokes 9-12 to retain the spokes, the spokes 9-12 are only engaged by the plastic material, which is a material of low thermal conductivity. The spokes 9-12 are thus thermally isolated from the hub 16. The spokes 9-12 each extend right through the hub 16.

The hub 16 also has a circular aperture 23 extending through it to enable the hub 16 to be mounted to a steering column. The aperture may be reinforced by an integrally moulded metal sleeve. The hub 16 incorporates four bolt holes 24-27 which each extend through an upstanding section of the hub 16. These bolt holes extend downwardly through the hub 16 so that bolts may be used to secure a heat transfer unit to the lower side of the hub 16, that is to say the side that is furthest away from the rim 2.

The lower ends of the spokes 9-12 protrude through the under-surface of the hub 16 to a heat transfer unit 28 which is mounted to the lower side of the hub 16. The heat transfer unit 28 may be, for instance, a heater or a heat exchanger. The heat transfer unit 28 is securely attached to the lower side of the hub by bolts which extend through bolt holes 24-27. The heat transfer unit 28 includes four downwardly extending projections 29-32, each of metal, and each accommodating one end of a respective spoke.

The heat transfer unit is centrally mounted on the lower side of the hub 16 and the circular aperture 23 extends through both the hub 16 and the heat transfer unit 28.

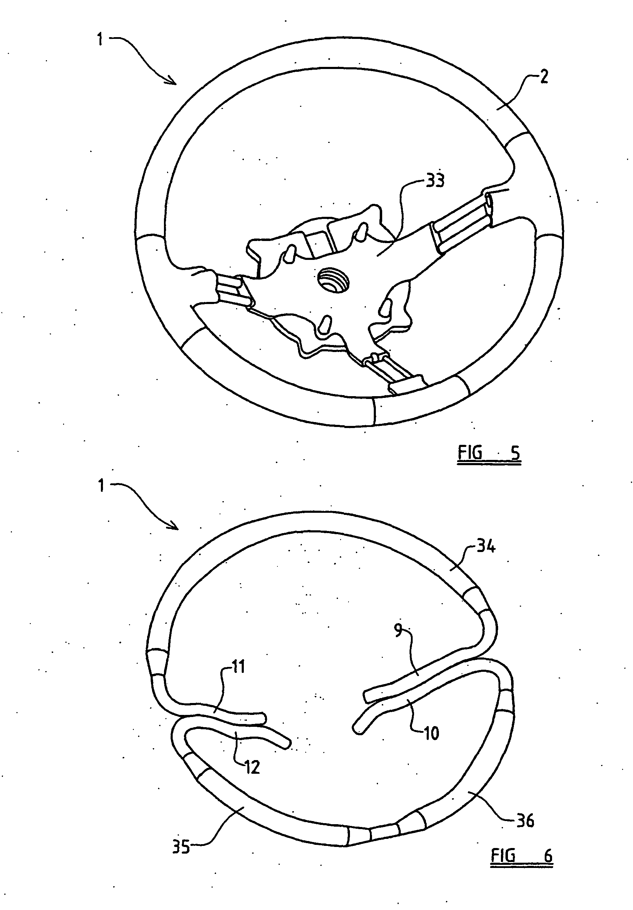

Once the steering wheel frame 1 has been assembled with the hub 16 and the heat transfer unit 28, a plate 33 is fixed in place over the upper surface of the hub 16, as shown in Figure 5. The plate 33 lies over the apertures formed by the honeycomb-type shape of the planar portion of the hub 16. The plate 33 is provided with mounts (not shown) to co-operate with an air-bag unit to mount the air-bag unit in position. The steering wheel may be attached to a steering column of a vehicle by mounting the circular aperture 23 onto the steering column and securing it in place with a nut.

In the described embodiment the entire hub 16 is made of plastic. Thus the parts of the hub which retain the spokes 9-12 are of non-thermally conductive material, and the hub 16 itself is of a material of low thermal conductivity and low thermal mass. Consequently virtually none of the heat present in the spokes 9-12 is conducted into the hub 16. This helps minimise energy being lost by unnecessary heating of the hub 16. Because the hub 16 does not have to be heated, the temperature of the rim 2 rises relatively rapidly.

In cold weather a driver may wish to raise the temperature of the rim 2 of the steering wheel frame 1 to a comfortable temperature. In this case, the driver can actuate a heater within the heat transfer unit 28. The heat transfer unit 28 conducts heat from the heater to the lower ends of the spokes 9-12. The spokes 9-12 conduct heat along their length to the junctions 6,7 where each spoke is attached to the rim 2. The junctions 6,7 allow heat to be conducted easily from the spokes 9-12 into the rim 2. The heat pipes 3-5 making up rim 2 conduct this heat along their length, thus heating the rim of the steering wheel.

In hot weather the driver may wish to reduce the temperature of the rim 2 of the steering wheel frame 1, to a comfortable temperature for use. In this situation cool air may be blown onto the projections 29-32, in order to cool the lower ends of the spokes 9-12. As the lower part of the spokes 9-12 is cooled heat from the rim 2 is conducted down through spokes 9-12, away from the rim 2, thus lowering the temperature of the rim 2. As the hub 16 itself does not have to be cooled the temperature of the rim 2 falls relatively rapidly.

An alternative form of frame for a steering wheel is shown in Figure 6. In this alternate embodiment the rim 2 is partially formed from a first heat pipe 34, which is similar to heat pipe 3 in the preferred embodiment. The heat pipe 34 has a semi-circular central section, with substantially radially inwardly extending terminal parts that constitute spokes. The remaining part of the rim consists of two arcuate heat pipes 35,36. However, in an alternative embodiment a single semi-circular pipe may be used in place of the two arcuate pipes 35,36. One end of the pipe 35 is connected to an adjacent end of pipe 36. The pipes 35,36 are similar to hear pipes 4 and 5 in the preferred embodiment. Heat pipes 35,36 each have a terminal extension from the free end of the pipe. The extension forms radially inwardly directed spokes 10,12. The frame 1 may be used to form a steering wheel in a manner similar to that described above.

In the present Specification "comprises" means "includes or consists of" and "comprising" means "including or consisting of".

## Claims

1. A steering wheel (1) comprising a hub (16) to be mounted on a steering column of a vehicle, a heat transfer unit (28) mounted on the hub (16), and at least one thermally conductive spoke (9-12) mounted on the hub (16), with part of the hub (16) retaining the spoke (9-12), one end of the spoke being in thermal contact with the heat transfer unit (28), the other end of the spoke (9-12) being attached to a rim (2) of the steering wheel (1) to conduct heat from the heat transfer unit (28) to the rim (2), or from the rim (2) to the heat transfer unit (28), **characterised in that** at least that part of the hub (16) which retains the or each spoke (9-12) is made of a material of low thermal conductivity.

2. A steering wheel (1) according to Claim 1 wherein the hub (16) is made of plastic.

3. A steering wheel (1) according to Claim 1 or Claim 2 wherein the hub (16) has a portion of honeycomb-type shape.

4. A steering wheel (1) according to any one of the preceding Claims wherein the hub (16) has at least one protruding sleeve (19-22) to receive the or each spoke (9-12).

5. A steering wheel (1) according to any one of the preceding Claims wherein the rim (2) incorporates at least one heat pipe (3-5), and the or each spoke (9-12) is formed as a terminal part of a said heat pipe (3-5).

6. A steering wheel (1) according to any one of the preceding Claims wherein the hub (16) is offset from the rim (2) and the heat transfer unit (29) is on the side of the hub (16) remote from the rim (2).

7. A steering wheel (1) according to Claim 6 wherein the heat transfer unit (28) includes a projection to accommodate one end of the spoke (9-12), the projection (29-32) being of thermally conductive material.

8. A steering wheel (1) according to any one of the preceding Claims wherein an aperture (23) for mounting the steering wheel (1) on the steering column extends through both the hub (16) and the heat transfer unit (28).

## Patentansprüche

1. Lenkrad (1), umfassend eine Nabe (16), die an der Lenksäule eines Fahrzeugs anzubringen ist, eine an der Nabe (16) angebrachte Wärmeübertragungseinheit (28) und zumindest eine an der Nabe (16) angebrachte wärmeleitende Speiche (9-12), wobei ein Teil der Nabe (16) die Speiche (9-12) hält, sich ein Ende der Speiche in Wärmekontakt mit der Wärmeübertragungseinheit (28) befindet und das andere Ende der Speiche (9-12) am Rand (2) des Lenkrads (1) angebracht ist, um Wärme von der Wärmeübertragungseinheit (28) auf den Rand (2) oder vom Rand (2) zur Wärmeübertragungseinheit (28) leiten, **dadurch gekennzeichnet, dass** zumindest jener Teil der Nabe (16), der die oder jede Speiche (9-12) hält, aus einem Material mit geringer Wärmeleitfähigkeit hergestellt ist.

2. Lenkrad (1) nach Anspruch 1, wobei die Nabe (16) aus Kunststoff hergestellt ist.

3. Lenkrad (1) nach Anspruch 1 oder Anspruch 2, wobei die Nabe (16) einen Abschnitt von wabenartiger Form hat.

4. Lenkrad (1) nach irgendeinem der vorhergehenden Ansprüche, wobei die Nabe (16) zumindest eine vorstehende Buchse (19-22) zum Aufnehmen der oder jeder Speiche (9-12) hat.

5. Lenkrad (1) nach irgendeinem der vorhergehenden Ansprüche, wobei der Rand (2) zumindest ein Heizrohr (3-5) beinhaltet und die oder jede Speiche (9-12) als Anschlussteil des Heizrohrs (3-5) ausgebildet ist.

6. Lenkrad (1) nach irgendeinem der vorhergehenden Ansprüche, wobei die Nabe (16) vom Rand (2) versetzt ist und sich die Wärmeübertragungseinheit (29) auf der vom Rand (2) entfernten Seite der Nabe (16) befindet.

7. Lenkrad (1) nach Anspruch 6, wobei die Wärmeübertragungseinheit (28) einen Vorsprung zur Aufnahme eines Endes der Speiche (9-12) einschließt, wobei der Vorsprung (29-32) aus wärmeleitendem Material besteht.

8. Lenkrad (1) nach irgendeinem der vorhergehenden Ansprüche, wobei eine Öffnung (23) zum Anbringen des Lenkrads (1) an der Lenksäule durch sowohl die Nabe (16) als auch die Wärmeübertragungseinheit (28) verläuft.

## Revendications

1. Un volant (1) se composant d'un moyeu (16) destiné à être monté sur la colonne de direction d'un véhicule, d'une unité de transmission de chaleur (28) montée sur le moyeu (16) et d'au moins un rayon thermiquement conducteur (9-12) monté sur le moyeu (16), une partie du moyeu (16) retenant le rayon (9-12), une extrémité du rayon étant en contact thermique avec l'unité de transmission de chaleur (28), l'autre extrémité du rayon (9-12) étant fixée à un bord (2) du volant (1) pour conduire la chaleur de l'unité de transmission de chaleur (28) au bord (2), ou du bord (2) à l'unité de transmission de chaleur (28), **se caractérisant par le fait qu'**au moins la partie du moyeu (16) qui retient le ou les rayons (9-12) est en matériau à faible conductivité thermique.

2. Un volant (1) selon la revendication 1, dans lequel le moyeu (16) est en plastique.

3. Un volant (1) selon les revendications 1 ou 2, dans lequel le moyeu (16) possède une partie dont la forme est du type nid d'abeilles.

4. Un volant (1) selon n'importe laquelle des revendications précédentes, dans lequel le moyeu (16) possède au moins un manchon qui dépasse (19-22) pour recevoir le ou les rayons (9-12).

5. Un volant (1) selon n'importe laquelle des revendications précédentes, dans lequel le bord (2) intègre au moins un tube de chaleur (3-5) et le ou les rayons (9-12) sont formés en tant que partie terminale du tube de chaleur (3-5).

6. Un volant (1) selon n'importe laquelle des revendications précédentes, dans lequel le moyeu (16) est décalé du bord (2) et l'unité de transmission de chaleur (29) se trouve du côté du moyeu (16) éloigné du bord (2).

7. Un volant (1) selon la revendication 6, dans lequel l'unité de transmission de chaleur (28) comporte une projection pour recevoir une extrémité du rayon (9-12), la projection (29-32) étant en matériau thermiquement conducteur.

8. Un volant (1) selon n'importe laquelle des revendications précédentes, dans lequel une ouverture (23) pour le montage du volant (1) sur la colonne de direction passe par le moyeu (16) et l'unité de transmission de chaleur (28).
